# EUROPEAN PATENT APPLICATION

(11) **EP 3 988 430 A1**
(43) Date of publication of application: **27.04.2022**
(21) Application number: 20202746.2
(22) Date of filing: 20.10.2020
(51) Int. Cl.: B62D 25/00, B62D 29/04, B62D 25/20, B32B 7/00

(54) **SUPPORTING STRUCTURE FOR AUTOMOTIVE CONSTRUCTION, PROCESS AND PANEL FOR ITS REALIZATION**

(71) Applicant: GMP Investments Holdings Limited, Limassol, 3105 (CY)
(72) Inventor: STIRANO, Giorgio, 98000 MONACO (IT)
(74) Representative: Metroconsult Srl

(57) **Abstract**

The invention relates to a load-bearing structure for automobiles and the like, including a chassis (2), a shell (3), a floorpan or other components, at least a part of which (13, 15, 16) is made by using composite honeycomb panels (20).

According to the invention, such panels (20) are provided with an external reinforcing layer (25, 26) made of a high-strength polymeric material such as carbon fiber, aramid fiber, fiberglass or the like.

## Description

The present invention generally relates to automotive structures such as, without limitation, floorpans, chassis, bodies, and parts thereof.

It is worth pointing out right away that, although in the following description and in the claims reference will mostly be made to cars, whether common cars or sports cars, the invention may nonetheless be applicable to motor vehicles in general, e.g. all-terrain vehicles, vans, trucks, or electric vehicles for passenger transportation in pedestrian precincts or areas.

As is known, automotive load-bearing structures have undergone many evolutionary steps as regards both their configuration and the materials employed for making them.

Without running through the story of such evolution, since obviously this is not the appropriate place for it, it can be said in brief that the designing and the making of load-bearing structures for automobiles and components thereof must try to attain several goals that are not always in mutual agreement, including mechanical strength and stress resistance (torsion, bending, vibrations, etc.), reduction of weights and costs, possibility of creating complex shapes and profiles of motor vehicles, and industrial-scale production.

For these reasons, several solutions have been devised over time, ranging from common chassis obtained by joining simple tubes having a circular, square or rectangular cross-section, thus forming a reticular structure, to more complex structures with a spot-welded sheet-steel body, which is the most widespread solution in industrial automotive production.

There are also more advanced solutions utilizing light materials such as aluminum and magnesium, which require particular and more expensive processing (e.g. casting).

This is why it has now become common to manufacture car chassis, floorpan and body parts by assembling composite panels, also known as "sandwiches"; in practice, these are panels wherein a central core consisting of a honeycomb or cellular structure is interposed between two flat outer faces, or "skins", made of aluminum.

The outer faces are aluminum sheets or plates fixed to the honeycomb core by welding, bonding or other equivalent junction types.

This technology makes it possible to make flat structural members combining lightness with the ability to withstand high loads (especially peak loads and bending/twisting stresses). However, composite panels do not permit making complex concave, convex or, more generally, curved shapes; in such cases, several flat panels have to be united, and this makes the resulting structure less mechanically resistant, because the junctions (usually effected by means of rivets, screws or the like) weaken the structure as a whole by introducing points of discontinuity. For this reason, the present Applicant has suggested a solution wherein one aluminum face or plate extends over several adjacent honeycomb cores, so as to eliminate the junctions between them.

This solution, described in European patent EP 1897788, makes it possible to improve the mechanical strength properties of car chassis and floorpans, even though the junctions between the panels are only effected, *de facto*, by the aluminum sheets or skins.

However, this may lead to criticalities when manufacturing large chassis; in order to overcome this drawback, it is known from patent EP 1897788 to apply reinforcement members in the most stressed areas of the chassis.

Such members consist of plates, sections or other components, which nevertheless increase weight and complexity and reduce, at least partly, the weight advantage offered by composite honeycomb panels.

The technical problem at the basis of the present invention is therefore to overcome the limitations highlighted in the above description of the state of the art.

In other words, the invention aims at providing a novel load-bearing structure or floorpan or chassis for automobiles, which uses composite honeycomb panels and which has improved mechanical strength properties in comparison with those of the above-discussed known structures.

The idea that solves this problem is to provide honeycomb panels made of and/or reinforced with high-strength polymeric materials, such as carbon fibers, aramid fibers, fiberglass-reinforced plastic and the like; these materials are also very light, so that the resulting chassis and floorpans will be light and very strong.

The features of the invention will be more specifically set out in the claims appended to this description; such features will become apparent in the light of the following description of an embodiment of the invention and of some possible variations thereof, as illustrated in the drawings annexed hereto by way of non-limiting example, wherein:

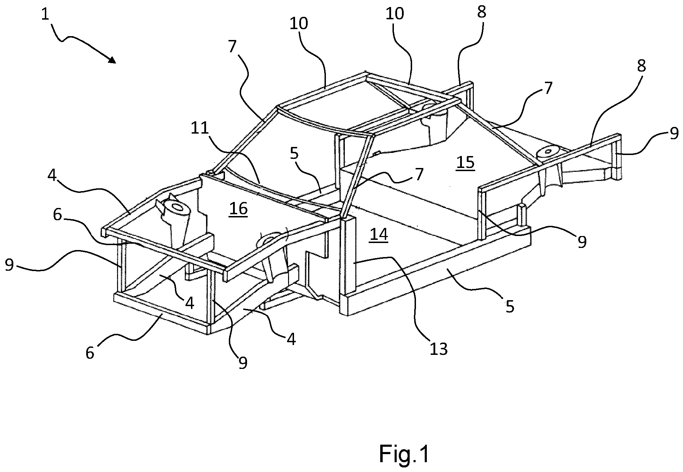

- Fig. 1 schematically shows an automotive load-bearing structure according to the present invention;
- Fig. 2 shows a part of the preceding structure;
- Fig. 3 shows a sectional view of the structure part of Fig. 2;
- Figs. 4 and 5 show a perspective view and a side view of a honeycomb panel of the preceding structure;
- Figs. 6 and 7 show respective variations of the preceding honeycomb panel;
- Fig. 8 shows a further variation of a part of an automotive structure according to the invention;
- Figs. 9(a), 9(b), 9(c) are cross-sectional views of particular variant embodiments.

With reference to the above-listed drawings, reference numeral 1 designates as a whole an automotive load-bearing structure in accordance with the invention.

The structure comprises a chassis 2 and a shell 3 mutually associated by spot welding or by another appropriate method (riveting, brazing or the like).

The chassis is composed of a number of structural members, such as beams 4, side members 5, cross members 6, pillars 7, rods 8, struts 9, bars 10, tie rods 11, etc., mechanically interconnected according to a "space frame" reticular configuration.

The connections among the elements 4-11 are effected through welds, hinges, joints, bolts or other appropriate fastening means, depending on the type of parts to be connected, their shape and dimensions, stresses, and other factors known to those skilled in the art (i.e. automotive engineers); for simplicity, such fastening means are not shown in the drawings.

In the load-bearing structure 1, the chassis 2 is associated with a shell or floorpan 3, i.e. a number of components of the vehicle's body which co-operate with those of the chassis 2, in order to complete and/or enhance its mechanical properties, such as the bending and/or torsion resistance of the resulting vehicle.

In this case, the shell 3 comprises a central cradle 13 disposed between the two side members 5 at the floor 14 of the passenger compartment, a rear bed 15 and a front wall or shield 16. The above-mentioned elements, especially sheet parts, are preferably made of metallic material such as steel, but aluminum and magnesium may be used as well; as will become apparent below, synthetic materials like carbon fibers and aramid fibers may also be used.

Before proceeding any further with this description, it is worth pointing out that, for clarity's sake, the structure 1 according to the invention, its parts and their configuration and/or representation have been simplified and limited in the drawings to what may be useful to those skilled in the art to understand the invention.

It will be possible to implement the invention on the basis of the information provided herein, possibly by integrating it with the common general technical knowledge of those skilled in the art, such as automotive engineers or directors of technical departments of automotive manufacturers.

Furthermore, the parts of the load-bearing structure 1 may be configured or combined as deemed appropriate in one or more embodiments, since they are not limited to what is shown merely for illustrative purposes in the drawings.

Therefore, any reference to "an embodiment" or "an example of embodiment" or similar expressions in the present description will indicate that a particular configuration, structure or feature described with reference to an element is comprised in at least one possible embodiment of the invention.

The reference numerals shown in the drawings are only used for clarity and explanation purposes, and shall not limit the protection scope, extent or teaching of the invention. Therefore, in light of this preamble, it can be stated that, in the structure 1, the cradle 13, the rear bed 15 and the front wall 16 are preferably made out of honeycomb panels 20 according to the invention.

While taking into account the above considerations about the embodiments of the invention described herein, it must nevertheless be added that the honeycomb panels 20 may be used for only a portion of the cradle 13 and/or of the rear bed 15 and/or of the front wall 16, since their use, number and size are dependent on the type of vehicle (e.g. for road or all-terrain use) for which they are intended, on its power, on the stresses it will have to undergo, on the materials used for the panels themselves, etc.

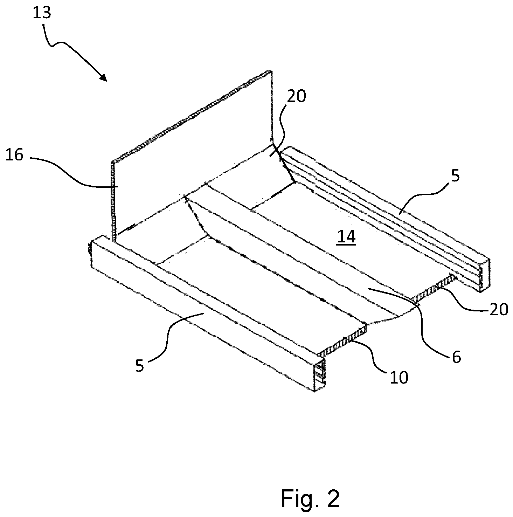

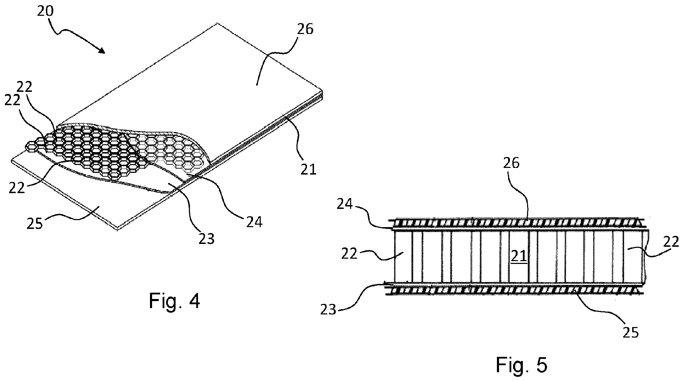

As shown in Figures 2-5, the honeycomb panels 20 comprise a central core 21 with cells 22 having a polygonal (hexagonal, octagonal, etc.) section, or the like, interposed between two sheets or "skins" 23, 24; preferably, the cells 22 and the faces 23, 24 are made out of sheets or plates of metallic material having good strength and lightness characteristics.

Aluminum is the preferred material, but other materials, such as zinc, magnesium and alloys thereof (e.g. zamak) may be used as well.

In accordance with the invention, the faces 23, 24 may extend beyond the honeycomb core 21, covering also multiple adjacent panels; the faces 23, 24 of the panels 20, or at least a part thereof, particularly along the edges, are reinforced with a coating layer 25, 26 made of high-strength polymeric material.

For said coating layer 25, 26 it is preferable to use carbon fibers (also commercially known as kevlar^{®}), aramid fibers, fiberglass or fiberglass-reinforced plastic, or the like.

More in general, it can be said that the coating layer 25, 26 in question must have good mechanical strength properties, along with lightness and formability: thus, in addition to reinforcing the panels 20 whereon it is applied, it will also facilitate the assembling thereof to obtain the parts 13, 15, 16 of the load-bearing structure 1.

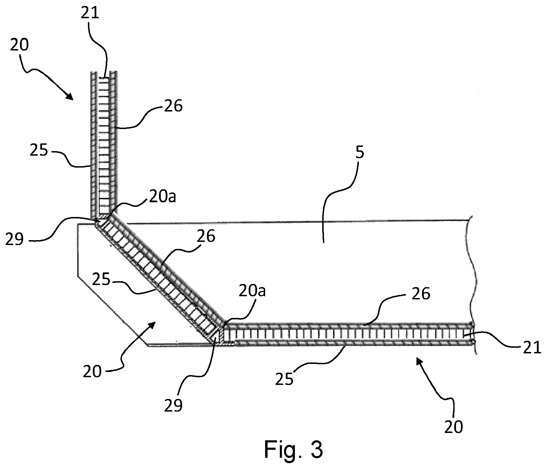

To this end, in one possible implementation like the one shown in the sectional view of Figure 3, the panels 20 forming the front wall 16 are coated on both faces 23, 24 with a coating layer 25, 26, which is substantially configured to form, at the corners where the honeycomb cores 21 of the different panels 20 converge, a connection section 29.

In this manner, the assembly of interconnected honeycomb panels 20 forms a front wall 16 which has very good strength properties not only in the flat areas, but also at the corners, or anyway at the points of discontinuity between one panel 20 and the next.

This result is attained without significantly increasing the weight of the panels 20 and of the wall as a whole, thanks to the use of the above-mentioned polymeric materials.

In other words, it can be stated that, in order to obtain comparable results by using traditional honeycomb panels with aluminum outer faces or the like, all other conditions being equal, it would be necessary to use much greater dimensions and thicknesses, resulting in increased weight compared with the invention.

Furthermore, it must be taken into account that it would not be possible to connect the various panels 20 at the sections 29 with the panels known in the art; therefore, the resulting product (i.e. the front wall 16, but also the rear bed 15 or the cradle 13) offers improved performance in this respect as well.

In accordance with a preferred embodiment of the invention, the process of fabricating the honeycomb panels 20 with the coating layer 25, 26 is carried out in moulds where carbon fibers or other polymeric materials are arranged, which polymerize with heat, thus remaining anchored to the skins 23, 24 of the panels 20 in the required shape.

Depending on the application, shape and dimensions of the parts of automotive load-bearing structures 1 to be manufactured, the coating 25, 26 of the panels 20 may be partial or local, i.e. it may cover some areas only, without covering the whole part.

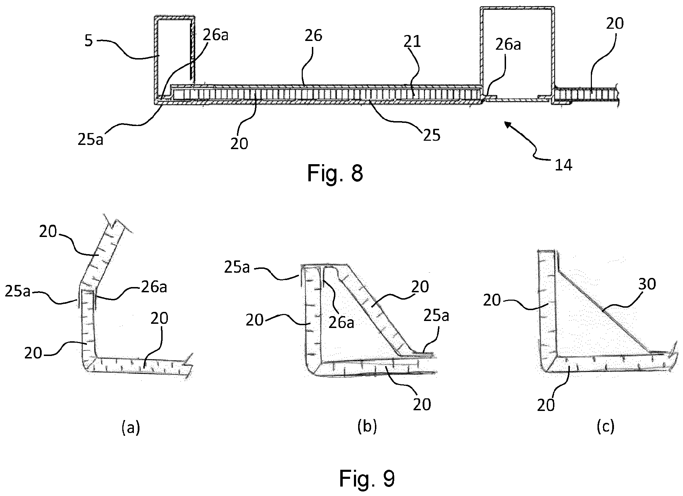

This is the case shown by way of example in Figures 9 (a), (b), (c), which illustrate the detail of the junction between honeycomb panels 20, the edges of which are coated with the polymeric layer 25 and/or 26 suitably shaped for connecting them.

As can be seen, in these variations the polymeric material 25 and/or 26 is shaped with appendices 25a, 26a protruding from the edge 20a of the panels 20 to facilitate the male-female (or tenon-mortise) connection between them, as shown in Figures 9 (a) and (b).

The connection may be further reinforced by applying the polymeric material 25 and/or 26 as a wall 30 extending between two adjacent panels 20, as shown in Figure 9(c).

In this case, the polymeric material of the wall 30 may be left to adhere to the panels 20 during the reticulation phase, or glued by means of adhesives, or anchored by means of joints, e.g. by penetrating the honeycomb core 21 through holes or apertures in the skins 23, 24.

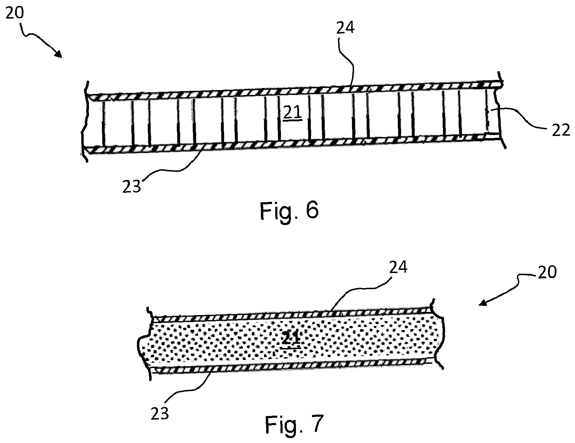

In this context, it must be pointed out that, according to one possible variant of the invention shown in Figure 6, the honeycomb panel 20 may be realized with the core 21 of cells 22 interposed between faces or skins 23, 24 made of the above-mentioned high-strength polymeric material.

In other terms, according to this variation it is conceivable to make some parts of the automotive load-bearing structure 1 by using honeycomb panels reinforced only with faces or skins 23, 24 made of carbon or aramid fiber, fiberglass or other light polymeric materials having high mechanical strength properties.

Of course, the thickness of the skins 23, 24 will have to be determined in accordance with design choices, and may therefore vary from a few fractions of a millimeter to as much as a few millimeters.

One application of panels 20 realized by using skins 23, 24 made of polymeric material is visible in Figure 8, which shows a cross-section of the floorpan 14 of the passenger compartment of the vehicle, wherein the panels 20 are connected to the side member 5 of the chassis by exploiting the protruding end 25a, 26a of the reinforcing layer that extends along the edge 20a of the panels adjacent to the side member or to the central channel 6.

Finally, the core 21 of the panels 20 may also vary from honeycomb cells 22; for example, materials such as polymeric foams (e.g. polyurethane, polystyrene, etc. foams) or other foam materials whose mechanical properties are suitable for application in automotive load-bearing structures.

This situation is schematically illustrated in Figure 7, which shows a panel wherein the core 21 is made of foam material and the skins 23, 24 are made of high-strength polymeric material. In this case as well, however, skins 23, 24 consisting of aluminum sheets and reinforcing layers 25, 26 made of polymeric material applied thereon may be used, as explained in the example of Figures 3-5.

All of these variants will still fall within the scope of the following claims.

## Claims

1. Load-bearing structure for automobiles and the like, comprising a chassis or frame (2) and/or a shell (3), a floorpan or other components including at least one part (13, 15, 16) made out of composite panels (20) comprising an inner core (21) interposed between outer skins or faces (23, 24), **characterized in that** at least one of such panels (20) comprises a reinforcing layer (25, 26) extending on at least a portion thereof, which is made of a high-strength polymeric material such as carbon fiber, aramid fiber, fiberglass or the like.

2. Structure according to claim 1, wherein the reinforcing layer (25, 26) is applied onto at least one of the skins (23, 24) of the panel (20).

3. Structure according to claims 1 or 2, wherein the reinforcing layer (25, 26) constitutes an outer skin (23, 24) of the panel (20).

4. Structure according to any one of the preceding claims, wherein the reinforcing layer (25, 26) extends along the edge (20a) of an associated panel (20) and is adapted to be connected to an adjacent panel (20).

5. Structure according to any one of the preceding claims, wherein the reinforcing layer (25, 26) substantially comprises a section (2) connecting two adjacent panels (20).

6. Structure according to any one of the preceding claims, wherein the reinforcing layer (25, 26) comprises appendices (25a, 26a) protruding from the edge (20a) of an associated panel (20) to facilitate the male-female coupling, or the like, to an adjacent panel (20).

7. Structure according to any one of the preceding claims, wherein the composite panel (10) is of the honeycomb type and comprises a core (21) of cells (22) or of similar subdivision elements.

8. Structure according to any one of claims 1 to 6, wherein the composite panel (10) comprises a core (21) of foam material, such as polymeric foam or the like.

9. Composite panel for an automotive structure according to the preceding claims, comprising an inner core (21) interposed between outer skins or faces (23, 24), **characterized in that** it comprises a reinforcing layer (25, 26) extending on at least a portion thereof, which is made of a high-strength polymeric material such as carbon fiber, aramid fiber, fiberglass or the like.

10. Panel according to claim 9, wherein the skins (23, 24) consist of a metal plate and the reinforcing layer (25, 26) is applied onto such plate.

11. Method for making a composite panel according to claims 9 and 10, comprising an inner core (21) interposed between outer skins or faces (23, 24), comprising the steps of:
- applying a reinforcing layer (25, 26) extending on at least a portion of the skins and/or along the edge (20a) thereof, which is made of a high-strength polymeric material such as carbon fiber, aramid fiber, fiberglass or the like;
- disposing the panel (20), with the reinforcing layer applied thereon, into a mould;
- hardening the reinforcing layer (25, 26) during a hot polymerization phase.
